# EUROPEAN PATENT SPECIFICATION

(11) **EP 2 058 202 B1**
(45) Date of publication and mention of the grant of the patent: **29.05.2013**
(21) Application number: 08019044.0
(22) Date of filing: 30.10.2008
(51) Int. Cl.: B60W 20/00, B60K 1/02, B60K 6/26, B60K 6/365, B60K 6/445, B60K 6/547, F16H 3/72, B60W 10/06, B60W 10/08, B60W 10/10, B60W 10/26

(54) **Method for managing electric power in a powertrain system**
Verfahren zum Management der elektrischen Leistung in einem Antriebsstrangsystem
Procédé de gestion de la puissance électrique dans un système de transmission

(30) Priority: 02.11.2007 US 984879 P; 19.10.2008 US 253985
(43) Date of publication of application: 13.05.2009
(73) Proprietor: GM Global Technology Operations LLC, Detroit, MI 48265-3000 (US); Daimler AG, 70546 Stuttgart (DE); Chrysler LLC, Auburn Hills, MI 48326-2757 (US); Bayerische Motoren Werke Aktiengesellschaft, 80788 München (DE)
(72) Inventor: Heap, Anthony H., Ann Arbor, Michigan 48105 (US); Cawthorne, William R., Milford, Michigan 48381 (US)
(74) Representative: Manitz, Finsterwald & Partner GbR

(56) References cited:
- US-A- 4 335 429
- US-B1- 6 832 148
- US-B1- 6 868 318
- US-B1- 7 154 236

## Description

### TECHNICAL FIELD

This disclosure is related to powertrain control within hybrid vehicles and in particular to a method according to the preamble of claim 1, as it is known from US 7,154,236 B1, e.g..

### BACKGROUND

The statements in this section merely provide background information related to the present disclosure and may not constitute prior art.

Known hybrid powertrain architectures include torque-generative devices, including internal combustion engines and torque machines, which transmit torque through a transmission device to an output member. One exemplary powertrain includes a two-mode, compound-split, electro-mechanical transmission which utilizes an input member for receiving motive torque from a prime mover power source, preferably an internal combustion engine, and an output member. The output member can be operatively connected to a driveline for a motor vehicle for transmitting tractive torque thereto. Electric machines, operative as motors or generators, generate a torque input to the transmission, independently of a torque input from the internal combustion engine. The electric machines may transform vehicle kinetic energy, transmitted through the vehicle driveline, to electrical energy that is storable in an electrical energy storage device. A control system monitors various inputs from the vehicle and the operator and provides operational control of the powertrain, including controlling transmission operating range state and gear shifting, controlling the torque-generative devices, and regulating the electrical power interchange among the electrical energy storage device and the electric machines to manage outputs of the transmission, including torque and rotational speed.

### SUMMARY

A powertrain system includes a transmission operative to transfer power between a plurality of power actuators and an output member, and an energy storage device. A method for controlling the powertrain system includes establishing a first set of electric power limits and a second set of electric power limits for the energy storage device, determining a preferred input power from a first power actuator based upon the first set of electric power limits, determining a first set of power constraints for constraining input power from the first power actuator and a second set of power constraints for constraining output power from the output member based upon a second set of electric power limits, and controlling operation of the powertrain system based upon the preferred input power, the first set of power constraints, and the second set of power constraints.

### BRIEF DESCRIPTION OF THE DRAWINGS

One or more embodiments will now be described, by way of example, with reference to the accompanying drawings, in which:

FIG. 1 is a schematic diagram of an exemplary powertrain, in accordance with the present disclosure;

FIG. 2 is a schematic diagram of an exemplary architecture for a control system and powertrain, in accordance with the present disclosure;

FIGS. 3 and 4 are schematic flow diagrams of a control system architecture for controlling and managing torque in a powertrain system, in accordance with the present disclosure; and

FIG. 5 is a block diagram of an exemplary power limit determination function in accordance with the present disclosure.

### DETAILED DESCRIPTION

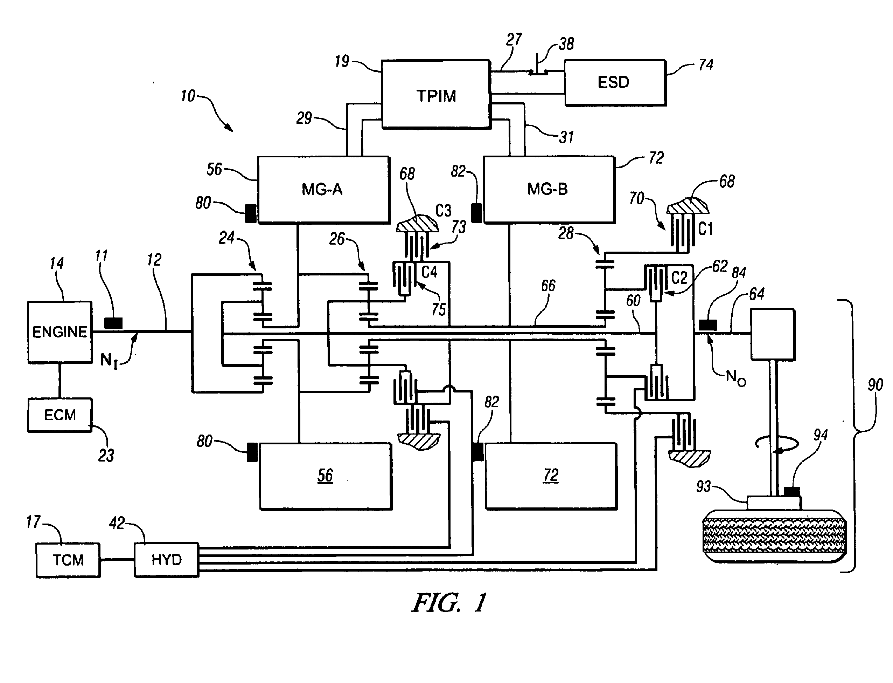

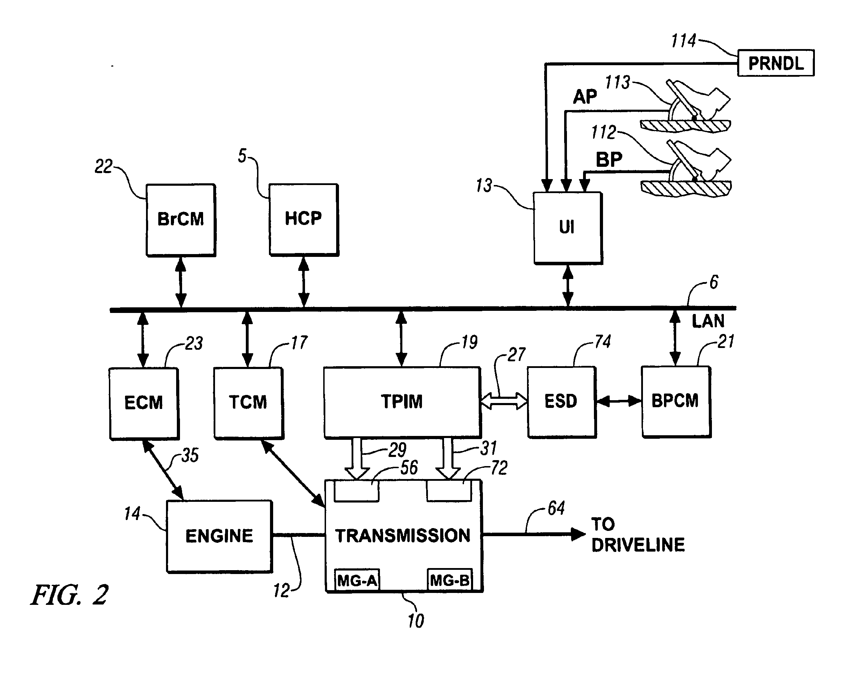

Referring now to the drawings, wherein the showings are for the purpose of illustrating certain exemplary embodiments only and not for the purpose of limiting the same, Figs. 1 and 2 depict an exemplary hybrid powertrain. The exemplary hybrid powertrain in accordance with the present disclosure is depicted in Fig. 1, comprising a two-mode, compound-split, electro-mechanical hybrid transmission 10 operatively connected to an engine 14 and first and second electric machines ('MG-A') 56 and ('MG-B') 72. The engine 14 and first and second electric machines 56 and 72 each generate power which can be transferred to the transmission 10. The power generated by the engine 14 and the first and second electric machines 56 and 72 and transferred to the transmission 10 is described in terms of input and motor torques, referred to herein as T_{I}, T_{A}, and T_{B} respectively, and speed, referred to herein as N_{I}, N_{A}, and N_{B}, respectively.

The exemplary engine 14 comprises a multi-cylinder internal combustion engine selectively operative in several states to transfer torque to the transmission 10 via an input shaft 12, and can be either a spark-ignition or a compression-ignition engine. The engine 14 includes a crankshaft (not shown) operatively coupled to the input shaft 12 of the transmission 10. A rotational speed sensor 11 monitors rotational speed of the input shaft 12. Power output from the engine 14, comprising rotational speed and engine torque, can differ from the input speed N_{I} and the input torque T_{I} to the transmission 10 due to placement of torque-consuming components on the input shaft 12 between the engine 14 and the transmission 10, e.g., a hydraulic pump (not shown) and/or a torque management device (not shown).

The exemplary transmission 10 comprises three planetary-gear sets 24, 26 and 28, and four selectively engageable torque-transferring devices, i.e., clutches C1 70, C2 62, C3 73, and C4 75. As used herein, clutches refer to any type of friction torque transfer device including single or compound plate clutches or packs, band clutches, and brakes, for example. A hydraulic control circuit 42, preferably controlled by a transmission control module (hereafter 'TCM') 17, is operative to control clutch states. Clutches C2 62 and C4 75 preferably comprise hydraulically-applied rotating friction clutches. Clutches C 1 70 and C3 73 preferably comprise hydraulically-controlled stationary devices that can be selectively grounded to a transmission case 68. Each of the clutches C 1 70, C2 62, C3 73, and C4 75 is preferably hydraulically applied, selectively receiving pressurized hydraulic fluid via the hydraulic control circuit 42.

The first and second electric machines 56 and 72 preferably comprise three-phase AC machines, each including a stator (not shown) and a rotor (not shown), and respective resolvers 80 and 82. The motor stator for each machine is grounded to an outer portion of the transmission case 68, and includes a stator core with coiled electrical windings extending therefrom. The rotor for the first electric machine 56 is supported on a hub plate gear that is operatively attached to shaft 60 via the second planetary gear set 26. The rotor for the second electric machine 72 is fixedly attached to a sleeve shaft hub 66.

Each of the resolvers 80 and 82 preferably comprises a variable reluctance device including a resolver stator (not shown) and a resolver rotor (not shown). The resolvers 80 and 82 are appropriately positioned and assembled on respective ones of the first and second electric machines 56 and 72. Stators of respective ones of the resolvers 80 and 82 are operatively connected to one of the stators for the first and second electric machines 56 and 72. The resolver rotors are operatively connected to the rotor for the corresponding first and second electric machines 56 and 72. Each of the resolvers 80 and 82 is signally and operatively connected to a transmission power inverter control module (hereafter 'TPIM') 19, and each senses and monitors rotational position of the resolver rotor relative to the resolver stator, thus monitoring rotational position of respective ones of first and second electric machines 56 and 72. Additionally, the signals output from the resolvers 80 and 82 are interpreted to provide the rotational speeds for first and second electric machines 56 and 72, i.e., N_{A} and N_{B}, respectively.

The transmission 10 includes an output member 64, e.g. a shaft, which is operably connected to a driveline 90 for a vehicle (not shown), to provide output power to the driveline 90 that is transferred to vehicle wheels 93, one of which is shown in Fig. 1. The output power at the output member 64 is characterized in terms of an output rotational speed No and an output torque To. A transmission output speed sensor 84 monitors rotational speed and rotational direction of the output member 64. Each of the vehicle wheels 93 is preferably equipped with a sensor 94 adapted to monitor wheel speed, V_{SS-WHL}, the output of which is monitored by a control module of a distributed control module system described with respect to Fig. 2, to determine vehicle speed, and absolute and relative wheel speeds for braking control, traction control, and vehicle acceleration management.

The input torque from the engine 14 and the motor torques from the first and second electric machines 56 and 72 (T_{I}, T_{A}, and T_{B} respectively) are generated as a result of energy conversion from fuel or electrical potential stored in an electrical energy storage device (hereafter 'ESD') 74. The ESD 74 is high voltage DC-coupled to the TPIM 19 via DC transfer conductors 27. The transfer conductors 27 include a contactor switch 38. When the contactor switch 38 is closed, under normal operation, electric current can flow between the ESD 74 and the TPIM 19. When the contactor switch 38 is opened electric current flow between the ESD 74 and the TPIM 19 is interrupted. The TPIM 19 transmits electrical power to and from the first electric machine 56 by transfer conductors 29, and the TPIM 19 similarly transmits electrical power to and from the second electric machine 72 by transfer conductors 31 to meet the torque commands for the first and second electric machines 56 and 72 in response to the motor torques T_{A} and T_{B}. Electrical current is transmitted to and from the ESD 74 in accordance with whether the ESD 74 is being charged or discharged.

The TPIM 19 includes the pair of power inverters (not shown) and respective motor control modules (not shown) configured to receive the torque commands and control inverter states therefrom for providing motor drive or regeneration functionality to meet the commanded motor torques T_{A} and T_{B}.
The power inverters comprise known complementary three-phase power electronics devices, and each includes a plurality of insulated gate bipolar transistors (not shown) for converting DC power from the ESD 74 to AC power for powering respective ones of the first and second electric machines 56 and 72, by switching at high frequencies. The insulated gate bipolar transistors form a switch mode power supply configured to receive control commands. There is typically one pair of insulated gate bipolar transistors for each phase of each of the three-phase electric machines. States of the insulated gate bipolar transistors are controlled to provide motor drive mechanical power generation or electric power regeneration functionality.
The three-phase inverters receive or supply DC electric power via DC transfer conductors 27 and transform it to or from three-phase AC power, which is conducted to or from the first and second electric machines 56 and 72 for operation as motors or generators via transfer conductors 29 and 31 respectively.

Fig. 2 is a schematic block diagram of the distributed control module system. The elements described hereinafter comprise a subset of an overall vehicle control architecture, and provide coordinated system control of the exemplary hybrid powertrain described in Fig. 1. The distributed control module system synthesizes pertinent information and inputs, and executes algorithms to control various actuators to meet control objectives, including objectives related to fuel economy, emissions, performance, drivability, and protection of hardware, including batteries of ESD 74 and the first and second electric machines 56 and 72. The distributed control module system includes an engine control module (hereafter 'ECM') 23, the TCM 17, a battery pack control module (hereafter 'BPCM') 21, and the TPIM 19. A hybrid control module (hereafter 'HCP') 5 provides supervisory control and coordination of the ECM 23, the TCM 17, the BPCM 21, and the TPIM 19. A user interface ('UI') 13 is operatively connected to a plurality of devices through which a vehicle operator controls or directs operation of the electro-mechanical hybrid powertrain. The devices include an accelerator pedal 113 ('AP'), an operator brake pedal 112 ('BP'), a transmission gear selector 114 ('PRNDL'), and a vehicle speed cruise control (not shown). The transmission gear selector 114 may have a discrete number of operator-selectable positions, including the rotational direction of the output member 64 to enable one of a forward and a reverse direction.

The aforementioned control modules communicate with other control modules, sensors, and actuators via a local area network (hereafter 'LAN') bus 6. The LAN bus 6 allows for structured communication of states of operating parameters and actuator command signals between the various control modules. The specific communication protocol utilized is application-specific. The LAN bus 6 and appropriate protocols provide for robust messaging and multi-control module interfacing between the aforementioned control modules, and other control modules providing functionality including e.g., antilock braking, traction control, and vehicle stability. Multiple communications buses may be used to improve communications speed and provide some level of signal redundancy and integrity. Communication between individual control modules can also be effected using a direct link, e.g., a serial peripheral interface ('SPI') bus (not shown).

The HCP 5 provides supervisory control of the hybrid powertrain, serving to coordinate operation of the ECM 23, TCM 17, TPIM 19, and BPCM 21. Based upon various input signals from the user interface 13 and the hybrid powertrain, including the ESD 74, the HCP 5 determines an operator torque request, an output torque command, an engine input torque command, clutch torque(s) for the applied torque-transfer clutches C 1 70, C2 62, C3 73, C4 75 of the transmission 10, and the motor torques T_{A} and T_{B} for the first and second electric machines 56 and 72. The TCM 17 is operatively connected to the hydraulic control circuit 42 and provides various functions including monitoring various pressure sensing devices (not shown) and generating and communicating control signals to various solenoids (not shown) thereby controlling pressure switches and control valves contained within the hydraulic control circuit 42.

The ECM 23 is operatively connected to the engine 14, and functions to acquire data from sensors and control actuators of the engine 14 over a plurality of discrete lines, shown for simplicity as an aggregate bi-directional interface cable 35. The ECM 23 receives the engine input torque command from the HCP 5. The ECM 23 determines the actual engine input torque, T_{I}, provided to the transmission 10 at that point in time based upon monitored engine speed and load, which is communicated to the HCP 5. The ECM 23 monitors input from the rotational speed sensor 11 to determine the engine input speed to the input shaft 12, which translates to the transmission input speed, N_{I}. The ECM 23 monitors inputs from sensors (not shown) to determine states of other engine operating parameters including, e.g., a manifold pressure, engine coolant temperature, ambient air temperature, and ambient pressure. The engine load can be determined, for example, from the manifold pressure, or alternatively, from monitoring operator input to the accelerator pedal 113. The ECM 23 generates and communicates command signals to control engine actuators, including, e.g., fuel injectors, ignition modules, and throttle control modules, none of which are shown.

The TCM 17 is operatively connected to the transmission 10 and monitors inputs from sensors (not shown) to determine states of transmission operating parameters. The TCM 17 generates and communicates command signals to control the transmission 10, including controlling the hydraulic control circuit 42. Inputs from the TCM 17 to the HCP 5 include estimated clutch torques for each of the clutches, i.e., C 1 70, C2 62, C3 73, and C4 75, and rotational output speed, No, of the output member 64. Other actuators and sensors may be used to provide additional information from the TCM 17 to the HCP 5 for control purposes. The TCM 17 monitors inputs from pressure switches (not shown) and selectively actuates pressure control solenoids (not shown) and shift solenoids (not shown) of the hydraulic control circuit 42 to selectively actuate the various clutches C 1 70, C2 62, C3 73, and C4 75 to achieve various transmission operating range states, as described hereinbelow.

The BPCM 21 is signally connected to sensors (not shown) to monitor the ESD 74, including states of electrical current and voltage parameters, to provide information indicative of parametric states of the batteries of the ESD 74 to the HCP 5. The parametric states of the batteries preferably include battery state-of-charge, battery voltage ('V_{BAT}'), battery temperature, and available battery power ('P_{BAT}'), referred to as a range P_{BAT_MIN} to P_{BAT_MAX}.

A brake control module (hereafter 'BrCM') 22 is operatively connected to friction brakes (not shown) on each of the vehicle wheels 93. The BrCM 22 monitors the operator input to the brake pedal 112 and generates control signals to control the friction brakes and sends a control signal to the HCP 5 to operate the first and second electric machines 56 and 72 based thereon.

Each of the control modules ECM 23, TCM 17, TPIM 19, BPCM 21, and BrCM 22 is preferably a general-purpose digital computer comprising a microprocessor or central processing unit, storage mediums comprising read only memory ('ROM'), random access memory ('RAM'), electrically programmable read only memory ('EPROM'), a high speed clock, analog to digital ('A/D') and digital to analog ('D/A') circuitry, and input/output circuitry and devices ('I/O') and appropriate signal conditioning and buffer circuitry. Each of the control modules has a set of control algorithms, comprising resident program instructions and calibrations stored in one of the storage mediums and executed to provide the respective functions of each computer. Information transfer between the control modules is preferably accomplished using the LAN bus 6 and SPI buses. The control algorithms are executed during preset loop cycles such that each algorithm is executed at least once each loop cycle. Algorithms stored in the non-volatile memory devices are executed by one of the central processing units to monitor inputs from the sensing devices and execute control and diagnostic routines to control operation of the actuators, using preset calibrations. Loop cycles are executed at regular intervals, for example each 3.125, 6.25, 12.5, 25 and 100 milliseconds during ongoing operation of the hybrid powertrain.
Alternatively, algorithms may be executed in response to the occurrence of an event.

The exemplary hybrid powertrain selectively operates in one of several operating range states that can be described in terms of an engine state comprising one of an engine-on state ('ON') and an engine-off state ('OFF'), and a transmission state comprising a plurality of fixed gears and continuously variable operating modes, described with reference to Table 1, below.

**Table 1**

| Description | Engine | Transmission Operating | Applied | |
|---|---|---|---|---|
| | State | Range State | Clutches | |
| M1_Eng_Off | OFF | EVT Mode 1 | C1 70 | |
| M1_Eng_On | ON | EVT Mode 1 | C1 70 | |
| G1 | ON | Fixed Gear Ratio 1 | C1 70 | C4 75 |
| G2 | ON | Fixed Gear Ratio 2 | C1 70 | C2 62 |
| M2_Eng_Off | OFF | EVT Mode 2 | C2 62 | |
| M2_Eng_On | ON | EVT Mode 2 | C2 62 | |
| G3 | ON | Fixed Gear Ratio 3 | C2 62 | C4 75 |
| G4 | ON | Fixed Gear Ratio 4 | C2 62 | C3 73 |

Each of the transmission operating range states is described in the table and indicates which of the specific clutches C 1 70, C2 62, C3 73, and C4 75 are applied for each of the operating range states. A first continuously variable mode, i.e., EVT Mode 1, or M1, is selected by applying clutch C1 70 only in order to "ground" the outer gear member of the third planetary gear set 28. The engine state can be one of ON ('M1_Eng_On') or OFF ('M1_Eng_Off'). A second continuously variable mode, i.e., EVT Mode 2, or M2, is selected by applying clutch C2 62 only to connect the shaft 60 to the carrier of the third planetary gear set 28. The engine state can be one of ON ('M2_Eng_On') or OFF ('M2_Eng_Off'). For purposes of this description, when the engine state is OFF, the engine input speed is equal to zero revolutions per minute ('RPM'), i.e., the engine crankshaft is not rotating. A fixed gear operation provides a fixed ratio operation of input-to-output speed of the transmission 10, i.e., N_{I}/N_{O}. A first fixed gear operation ('G1') is selected by applying clutches C 1 70 and C4 75. A second fixed gear operation ('G2') is selected by applying clutches C1 70 and C2 62. A third fixed gear operation ('G3') is selected by applying clutches C2 62 and C4 75. A fourth fixed gear operation ('G4') is selected by applying clutches C2 62 and C3 73. The fixed ratio operation of input-to-output speed increases with increased fixed gear operation due to decreased gear ratios in the planetary gears 24, 26, and 28. The rotational speeds of the first and second electric machines 56 and 72, N_{A} and N_{B} respectively, are dependent on internal rotation of the mechanism as defined by the clutching and are proportional to the input speed measured at the input shaft 12.

In response to operator input via the accelerator pedal 113 and brake pedal 112 as captured by the user interface 13, the HCP 5 and one or more of the other control modules determine torque commands to control the torque generative devices comprising the engine 14 and first and second electric machines 56 and 72 to meet the operator torque request at the output member 64 and transferred to the driveline 90. Based upon input signals from the user interface 13 and the hybrid powertrain including the ESD 74, the HCP 5 determines the operator torque request, a commanded output torque from the transmission 10 to the driveline 90, an input torque from the engine 14, clutch torques for the torque-transfer clutches C 1 70, C2 62, C3 73, C4 75 of the transmission 10; and the motor torques for the first and second electric machines 56 and 72, respectively, as is described hereinbelow.

Final vehicle acceleration can be affected by other factors including, e.g., road load, road grade, and vehicle mass. The operating range state is determined for the transmission 10 based upon a variety of operating characteristics of the hybrid powertrain. This includes the operator torque request communicated through the accelerator pedal 113 and brake pedal 112 to the user interface 13 as previously described. The operating range state may be predicated on a hybrid powertrain torque demand caused by a command to operate the first and second electric machines 56 and 72 in an electrical energy generating mode or in a torque generating mode. The operating range state can be determined by an optimization algorithm or routine which determines optimum system efficiency based upon operator demand for power, battery state of charge, and energy efficiencies of the engine 14 and the first and second electric machines 56 and 72. The control system manages torque inputs from the engine 14 and the first and second electric machines 56 and 72 based upon an outcome of the executed optimization routine, and system efficiencies are optimized thereby, to manage fuel economy and battery charging. Furthermore, operation can be determined based upon a fault in a component or system. The HCP 5 monitors the torque-generative devices, and determines the power output from the transmission 10 required in response to the desired output torque at output member 64 to meet the operator torque request. As should be apparent from the description above, the ESD 74 and the first and second electric machines 56 and 72 are electrically-operatively coupled for power flow therebetween. Furthermore, the engine 14, the first and second electric machines 56 and 72, and the electro-mechanical transmission 10 are mechanically-operatively coupled to transfer power therebetween to generate a power flow to the output member 64.

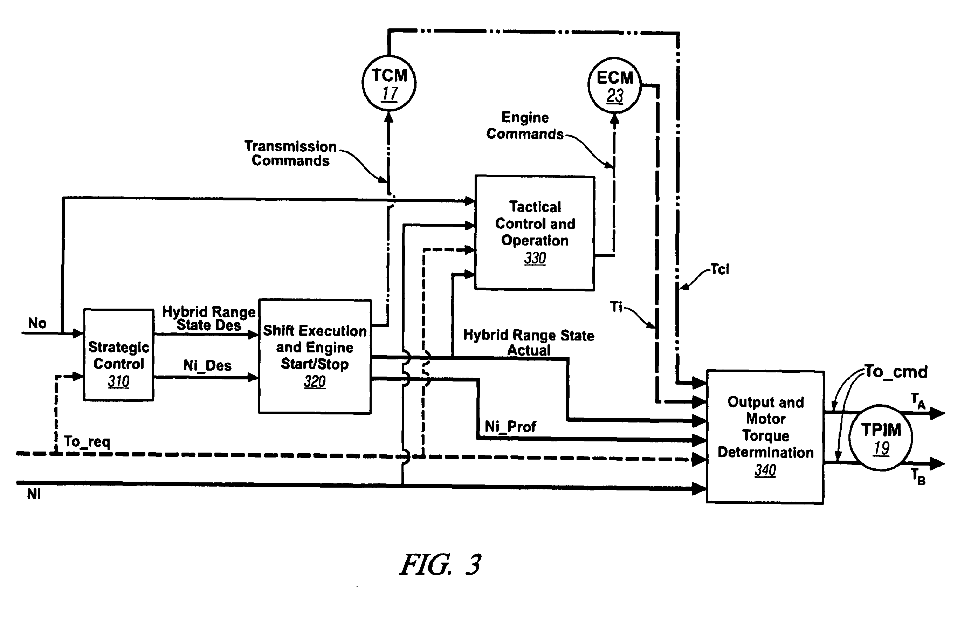

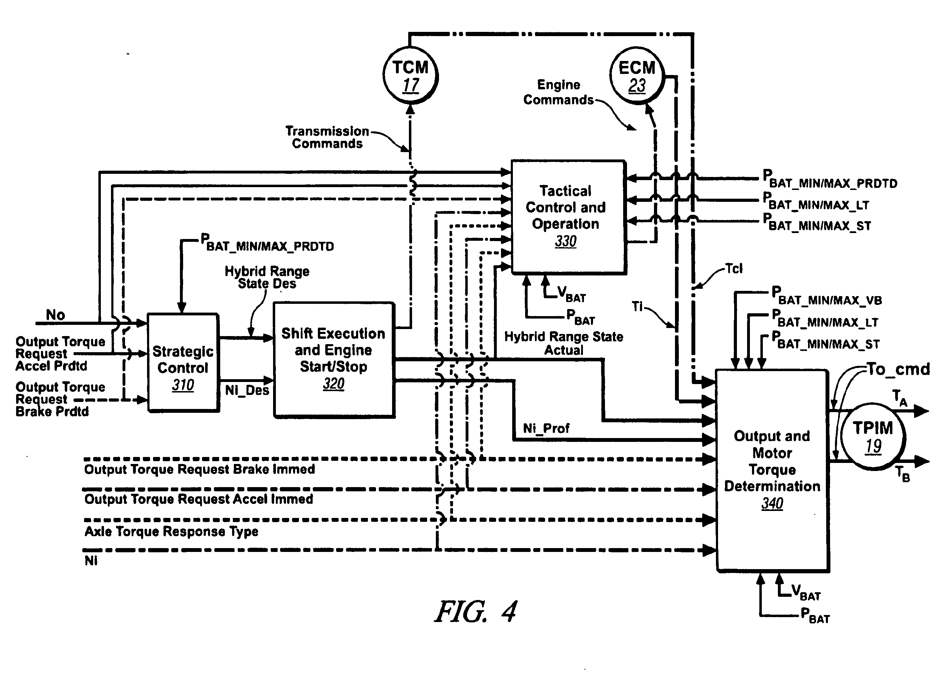

Figs. 3 and 4 show a control system architecture for controlling and managing torque and power flow in a powertrain system having multiple torque generative devices, described hereinbelow with reference to the hybrid powertrain system shown in Figs. 1 and 2, and residing in the aforementioned control modules in the form of executable algorithms and calibrations. The control system architecture can be applied to any powertrain system having multiple torque generative devices, including, e.g., a hybrid powertrain system having a single electric machine, a hybrid powertrain system having multiple electric machines, and non-hybrid powertrain systems.

The control system architecture of Figs. 3 and 4 depicts a flow of pertinent signals through the control modules. In operation, the operator inputs to the accelerator pedal 113 and the brake pedal 112 are monitored to determine the operator torque request ('To_req'). Operation of the engine 14 and the transmission 10 are monitored to determine the input speed ('Ni') and the output speed ('No'). A strategic optimization control scheme ('Strategic Control') 310 determines a preferred input speed ('Ni_Des') and a preferred engine state and transmission operating range state ('Hybrid Range State Des') based upon the output speed and the operator torque request, and optimized based upon other operating parameters of the hybrid powertrain, including predicted battery power limits ('P_{BAT_MIN/MAX_PRDTD}'), described herein, and response limits of the engine 14, the transmission 10, and the first and second electric machines 56 and 72. The strategic optimization control scheme 310 is preferably executed by the HCP 5 during each 100 ms loop cycle and each 25 ms loop cycle.

The outputs of the strategic optimization control scheme 310 are used in a shift execution and engine start/stop control scheme ('Shift Execution and Engine Start/Stop') 320 to command changes in the transmission operation ('Transmission Commands') including changing the operating range state. This includes commanding execution of a change in the operating range state if the preferred operating range state is different from the present operating range state by commanding changes in application of one or more of the clutches C 1 70, C2 62, C3 73, and C4 75 and other transmission commands. The present operating range state ('Hybrid Range State Actual') and an input speed profile ('Ni_Prof') can be determined. The input speed profile is an estimate of an upcoming input speed and preferably comprises a scalar parametric value that is a targeted input speed for the forthcoming loop cycle.

The engine operating commands and torque request are based upon the input speed profile during a transition in the operating range state of the transmission.

A tactical control scheme ('Tactical Control and Operation') 330 is repeatedly executed during one of the control loop cycles to determine engine commands ('Engine Commands') for operating the engine, including a preferred input torque from the engine 14 to the transmission 10 based upon the output speed, the input speed, and the operator torque request and the present operating range state for the transmission. The engine commands also include engine states including one of an all-cylinder operating state and a cylinder deactivation operating state wherein a portion of the engine cylinders are deactivated and unfueled, and engine states including one of a fueled state and a fuel cutoff state.

A clutch torque ('Tcl') for each clutch is estimated in the TCM 17, including the presently applied clutches and the non-applied clutches, and a present engine input torque ('Ti') reacting with the input member 12 is determined in the ECM 23. An output and motor torque determination scheme ('Output and Motor Torque Determination') 340 is executed to determine the preferred output torque from the powertrain ('To_emd'), which includes motor torque commands ('T_{A}', 'T_{B}') for controlling the first and second electric machines 56 and 72 in this embodiment. The preferred output torque is based upon the estimated clutch torque(s) for each of the clutches, the present input torque from the engine 14, the present operating range state, the input speed, the operator torque request, and the input speed profile. The first and second electric machines 56 and 72 are controlled through the TPIM 19 to meet the preferred motor torque commands based upon the preferred output torque. The output and motor torque determination scheme 340 includes algorithmic code which is regularly executed during the 6.25 ms and 12.5 ms loop cycles to determine the preferred motor torque commands.

Fig. 4 details the system for controlling and managing the output torque in the hybrid powertrain system, described with reference to the hybrid powertrain system of Figs. 1 and 2 and the control system architecture of Fig. 3. The hybrid powertrain is controlled to transfer the output torque to the output member 64 and thence to the driveline 90 to generate tractive torque at wheel(s) 93 to forwardly propel the vehicle in response to the operator input to the accelerator pedal 113 when the operator selected position of the transmission gear selector 114 commands operation of the vehicle in the forward direction. Preferably, forwardly propelling the vehicle results in vehicle forward acceleration so long as the output torque is sufficient to overcome external loads on the vehicle, e.g., due to road grade, aerodynamic loads, and other loads.

The BrCM 22 commands the friction brakes on the wheels 93 to apply braking force and generates a command for the transmission 10 to create a negative output torque which reacts with the driveline 90 in response to a net operator input to the brake pedal 112 and the accelerator pedal 113.
Preferably the applied braking force and the negative output torque can decelerate and stop the vehicle so long as they are sufficient to overcome vehicle kinetic power at wheel(s) 93. The negative output torque reacts with the driveline 90, thus transferring torque to the electro-mechanical transmission 10 and the engine 14. The negative output torque reacted through the electro-mechanical transmission 10 can be transferred to the first and second electric machines 56 and 72 to generate electric power for storage in the ESD 74.

The operator inputs to the accelerator pedal 113 and the brake pedal 112 comprise individually determinable operator torque request inputs including an immediate accelerator output torque request ('Output Torque Request Accel Immed'), a predicted accelerator output torque request ('Output Torque Request Accel Prdtd'), an immediate brake output torque request ('Output Torque Request Brake Immed'), a predicted brake output torque request ('Output Torque Request Brake Prdtd') and an axle torque response type ('Axle Torque Response Type'). As used herein, the term 'accelerator' refers to an operator request for forward propulsion preferably resulting in increasing vehicle speed over the present vehicle speed, when the operator selected position of the transmission gear selector 114 commands operation of the vehicle in the forward direction. The terms 'deceleration' and 'brake' refer to an operator request preferably resulting in decreasing vehicle speed from the present vehicle speed. The immediate accelerator output torque request, the predicted accelerator output torque request, the immediate brake output torque request, the predicted brake output torque request, and the axle torque response type are individual inputs to the control system shown in Fig. 4.

The immediate accelerator output torque request is determined based upon a presently occurring operator input to the accelerator pedal 113, and comprises a request to generate an immediate output torque at the output member 64 preferably to accelerate the vehicle. The immediate accelerator output torque request is unshaped, but can be shaped by events that affect vehicle operation outside the powertrain control. Such events include vehicle level interruptions in the powertrain control for antilock braking, traction control and vehicle stability control, which can be used to unshape or rate-limit the immediate accelerator output torque request.

The predicted accelerator output torque request is determined based upon the operator input to the accelerator pedal 113 and comprises an optimum or preferred output torque at the output member 64. The predicted accelerator output torque request is preferably equal to the immediate accelerator output torque request during normal operating conditions, e.g., when any one of antilock braking, traction control, or vehicle stability is not being commanded. When any one of antilock braking, traction control or vehicle stability is being commanded the predicted accelerator output torque request remains the preferred output torque with the immediate accelerator output torque request being decreased in response to output torque commands related to the antilock braking, traction control, or vehicle stability control.

Blended brake torque includes a combination of the friction braking torque generated at the wheels 93 and the output torque generated at the output member 64 which reacts with the driveline 90 to decelerate the vehicle in response to the operator input to the brake pedal 112.

The immediate brake output torque request is determined based upon a presently occurring operator input to the brake pedal 112, and comprises a request to generate an immediate output torque at the output member 64 to effect a reactive torque with the driveline 90 which preferably decelerates the vehicle. The immediate brake output torque request is determined based upon the operator input to the brake pedal 112 and the control signal to control the friction brakes to generate friction braking torque.

The predicted brake output torque request comprises an optimum or preferred brake output torque at the output member 64 in response to an operator input to the brake pedal 112 subject to a maximum brake output torque generated at the output member 64 allowable regardless of the operator input to the brake pedal 112. In one embodiment the maximum brake output torque generated at the output member 64 is limited to -0.2g. The predicted brake output torque request can be phased out to zero when vehicle speed approaches zero regardless of the operator input to the brake pedal 112. As desired by a user, there can be operating conditions under which the predicted brake output torque request is set to zero, e.g., when the operator setting to the transmission gear selector 114 is set to a reverse gear, and when a transfer case (not shown) is set to a four-wheel drive low range. The operating conditions whereat the predicted brake output torque request is set to zero are those in which blended braking is not preferred due to vehicle operating factors.

The axle torque response type comprises an input state for shaping and rate-limiting the output torque response through the first and second electric machines 56 and 72. The input state for the axle torque response type can be an active state, preferably comprising one of a pleasability limited state a maximum range state, and an inactive state. When the commanded axle torque response type is the active state, the output torque command is the immediate output torque. Preferably the torque response for this response type is as fast as possible.

The predicted accelerator output torque request and the predicted brake output torque request are input to the strategic optimization control scheme ('Strategic Control') 310. The outputs of the strategic optimization control scheme 310 including the desired operating range state for the transmission 10 ('Hybrid Range State Des') and the desired input speed from the engine 14 to the transmission 10 ('Ni Des'), which comprise inputs to the shift execution and engine operating state control scheme ('Shift Execution and Engine Start/Stop') 320.

A change in the input torque from the engine 14 which reacts with the input member from the transmission 10 can be effected by changing mass of intake air to the engine 14 by controlling position of an engine throttle utilizing an electronic throttle control system (not shown), including opening the engine throttle to increase engine torque and closing the engine throttle to decrease engine torque. Changes in the input torque from the engine 14 can be effected by adjusting ignition timing, including retarding spark timing from a mean-best-torque spark timing to decrease engine torque. The engine state can be changed between the engine-off state and the engine-on state to effect a change in the input torque. The engine state can be changed between the all-cylinder operating state and the cylinder deactivation operating state, wherein a portion of the engine cylinders are unfueled. The engine state can be changed by selectively operating the engine 14 in one of the fueled state and the fuel cutoff state wherein the engine is rotating and unfueled. Executing a shift in the transmission 10 from a first operating range state to a second operating range state can be commanded and achieved by selectively applying and deactivating the clutches C 1 70, C2 62, C3 73, and C4 75.

The immediate accelerator output torque request, the predicted accelerator output torque request, the immediate brake output torque request, the predicted brake output torque request, and the axle torque response type are inputs to the tactical control and operation scheme 330 to determine the engine commands comprising the preferred input torque and the preferred engine state to the engine 14.

The tactical control and operation scheme 330 can be divided into two parts. This includes determining a desired engine torque, and therefore a power split between the engine 14 and the first and second electric machines 56 and 72, and controlling the engine states and operation of the engine 14 to meet the desired engine torque. The engine states include the all-cylinder state and the cylinder deactivation state, and a fueled state and a deceleration fuel cutoff state for the present operating range state and the present engine speed, and the engine-off state and the engine-on state. The tactical control and operation scheme 330 monitors the predicted accelerator output torque request and the predicted brake output torque request to determine the predicted input torque request. The immediate accelerator output torque request and the immediate brake output torque request are used to control the engine speed/load operating point to respond to operator inputs to the accelerator pedal 113 and the brake pedal 112, e.g., to determine the engine command comprising the preferred input torque to the engine 14. Preferably, a rapid change in the preferred input torque to the engine 14 occurs only when the first and second electric machines 56 and 72 cannot meet the operator torque request.

The immediate accelerator output torque request, the immediate brake output torque request, and the axle torque response type are input to the output and motor torque control scheme ('Output and Motor Torque Determination') 340. The output and motor torque control scheme 340 executes to determine the motor torque commands during each iteration of one of the loop cycles, preferably the 6.25 ms loop cycle.

The present input torque ('Ti') from the engine 14 and the estimated applied clutch torque(s) ('Tcl') are input to the motor torque control scheme 340. The axle torque response type signal determines the torque response characteristics of the output torque command delivered to the output member 64 and hence to the driveline 90.

The motor torque control scheme 340 controls motor torque commands of the first and second electric machines 56 and 72 to transfer a net commanded output torque to the output member 64 of the transmission 10 that meets the operator torque request.

The control system architecture controls power flow among power actuators within the powertrain system. The powertrain system utilizes two or more power actuators to provide output power to an output member. Controlling power flow among the power actuators includes controlling the input speed N_{I} from the engine 14, the input torque T_{I} from the engine 14, and the motor torques T_{A}, T_{B} of the first and second electric machines 56 and 72. Although in the exemplary embodiment described herein above, the powertrain system utilizes the control system architecture to control power flow among power actuators including the engine 14, the ESD 74 and the first and second electric machines 56 and 72, in alternate embodiments the control system architecture can control power flow among other types of power actuators. Exemplary power actuators that can be utilized include fuel cells, ultra-capacitors and hydraulic actuators.

The control system architecture manages electric power within the exemplary powertrain system utilizing electric power limits. This includes monitoring voltage ('V_{BAT}') and power ('P_{BAT}') of the ESD 74. The control system architecture utilizes a method for managing electric power within the powertrain system that includes establishing predicted electric power limits, long-term electric power limits, short-term electric power limits, and voltage-based electric power limits. The method further includes determining a preferred input speed from the engine 14, a preferred input torque from the engine 14, a preferred engine state, and a preferred operating range state of the transmission 10 utilizing the predicted electric power limits. The method further includes determining input torque constraints for constraining input torque from the engine 14 and output torque constraints for constraining output torque T_{O} to the output member 64 based upon the long-term electric power limits and the short-term electric power limits. By constraining the output torque To, a total motor torque T_{M}, consisting of first and second motor torques T_{A} and T_{B} of the first and second electric machines 56 and 72, respectively, is also constrained based upon the set of output torque constraints and the input torque T_{I} from the engine 14. In an alternate embodiment, a set of total motor torque constraints can be determined based upon the long-term electric power limits and short-term electric power limits, in addition to, or instead of the set of output torque constraints. The method further includes determining output torque constraints based upon the voltage-based electric power limits.

The predicted electric power limits comprise preferred battery output levels associated with preferred ESD 74 performance levels, that is, the predicted electric power limits prescribe the desired operating envelope of the ESD 74. The predicted electric power limits comprise a range of battery output power levels from a minimum predicted electric power limit ('P_{BAT_MIN_PRDTD}') to a maximum predicted electric power limit ('P_{BAT_MAX_ PRDTD}'). The predicted electric power limits typically comprise a more constrained range of battery output power levels than the long-term electric power limits and the short-term electric power limits.

The long-term electric power limits comprise battery output power levels associated with operation of the ESD 74 while maintaining long-term durability of the ESD 74. Operation of the ESD 74 outside the long-term electric power limits for extended periods of time may reduce the operational life of the ESD 74. In one embodiment, the ESD 74 is maintained within the long-term electric power limits during steady-state operation, that is, operation not associated with transient operation. Exemplary transient operations include either tip-in and tip-out of the accelerator pedal 113, wherein transient acceleration operation is requested. Maintaining the ESD 74 within the long-term electric power limits, allows the ESD 74 to provide functionality such as delivering a highest power level that does not degrade operational life of the ESD 74. The long-term electric power limits comprise a range of battery output power levels from a minimum long-term electric power limit ('P_{BAT_MIN_LT}') to a maximum long-term electric power limit ('P_{BAT_MAX_LT}'). The long-term electric power limits typically comprise a more constrained range of battery output power levels than the short-term electric power limits.

The short-term electric power limits comprise ESD 74 output power levels associated with battery operation that does not significantly affect short-term battery durability. Operation of the ESD 74 outside the short-term electric power limits may reduce the operational life of the ESD 74. Operating the ESD 74 within the short-term electric power limits, but outside the long-term electric power limits for short periods of time, may minimally reduce the operational life of the ESD 74, however, does not result in large amounts of degraded operational performance to the ESD 74. In one embodiment, the ESD 74 is maintained within the short-term electric power limits during transient operation. The short-term electric power limits comprise a range of battery output power levels from a minimum short-term electric power limit ('P_{BAT_MIN_ST}') to a maximum short-term electric power limit ('P_{BAT_MAX_ST}').

The voltage-based electric power limits comprise a range of battery output power level from a minimum voltage-based electric power limit ('P_{BAT_MIN_VB}') to a maximum voltage-based electric power limit ('P_{BAT_MAX_VB}') based upon desired operating voltages of the ESD 74. The minimum voltage-based electric power limit P_{BAT_MIN_VB} is a minimum amount of battery output power that the ESD 74 outputs before reaching a maximum voltage V_{LID}. The maximum voltage-based electric power limit P_{BAT_MAX_VB} is an estimated amount of battery output power that the ESD 74 can output before reaching a minimum voltage V_{FLOOR}. The minimum voltage V_{FLOOR} is a minimum permissible voltage for operating the battery without significantly affecting short-term battery durability. Outputting power from the ESD 74 when the voltage levels of the ESD 74 are below the minimum V_{FLOOR} can cause degraded operational life of the ESD 74.

The strategic optimization control scheme 310 utilizes the predicted electric power limits in an optimization function to determine the preferred input speed and transmission operating range state based upon the predicted electric power limits and on the operator torque request. The tactical control scheme 330 utilizes the predicted electric power limits in an optimization function to determine the preferred input torque and preferred engine state from the engine 14 based upon the operator torque request and the predicted electric power limits. The optimization functions of the optimization control scheme 310 and the tactical control scheme 330 determine preferred operating points comprising at least one of a preferred input speed, a preferred input torque, a preferred engine state and transmission operating range state by determining operating points associated with lowest costs. The predicted electric power limits are utilized in the cost functions of the strategic optimization control scheme 310 and the tactical control scheme 330 to determine costs for operating the engine at selected operating points. The optimization functions further rely on system models and estimates of the operating characteristics of components of the powertrain system to determine costs.

The tactical control scheme 330 determines a set of tactical control electric power constraints based upon the short-term electric power limits and the long-term electric power limits. In particular, the tactical control scheme 330 sets the tactical control electric power constraints to the long-term electric power limits, when the battery output power of the ESD 74 is within a preferred tactical control battery output power operating range, wherein the preferred tactical control battery output power operating range is defined based upon the short-term electric power limits. When the battery output power is outside the preferred tactical control battery output power operating range, the tactical control scheme 330 utilizes feedback control based upon the battery output power and the short-term electric power limits to modify the tactical control electric power constraints to control battery output power P_{BAT} within the preferred tactical control battery output power operating range.

The set of tactical control electric power constraints are utilized to determine a set of input torque constraints for the tactical control scheme 330. When the preferred input torque as determined by the optimization function is within the set of input torque constraints, the tactical control scheme 330 requests the preferred input torque from the engine 14, and the engine 14 controls the input torque T_{I} to the preferred input torque, e.g., by adjusting engine fueling and/or adjusting position of an engine throttle. When the preferred input torque is outside the set of input torque constraints, the tactical control scheme requests the violated constraint for input torque from the engine 14, and the engine 14 adjusts combustion timing to control input torque within the input torque constraints.

The output and motor torque determination scheme 340 determines a set of output and motor torque determination electric power constraints based upon the short-term electric power limits and the long-term electric power limits. In particular, the output and motor torque determination scheme 340 sets the output and motor torque determination electric power constraints to the long-term electric power limits, when the battery output power of the ESD 74 is within a preferred output and motor torque determination battery output power operating range, wherein the preferred output and motor torque determination battery output power operating range is defined based upon the short-term electric power limits. When the battery output power is outside the preferred output and motor torque determination battery output power operating range, the output and motor torque determination scheme 340 utilizes feedback control based upon the battery output power and the short-term electric power limits to modify the output and motor torque determination electric power constraints to control battery output power within the preferred output and motor torque determination battery output power operating range.

The set of output and motor torque determination electric power constraints are utilized to determine a set of output torque constraints for the output and motor torque determination scheme 340. When a preferred output torque of the output and motor torque determination scheme is within the set of output torque constraints, the output and motor torque determination scheme 340 requests motor torques from the first and second electric machines 56 and 72 to meet the preferred output torque. When the preferred output torque of the output and motor torque determination scheme 340 is not within the set of output torque constraints, the output and motor torque determination scheme 340 requests motor torques from the first and second electric machines 56 and 72 to meet the violated constraint for motor torque.

The control system monitors a duration of time that the battery output power exceeds the long-term electric power limits. If the battery output power exceeds the long-term electric power limit for longer than a predetermined time period, the control system sets the long-term electric power limits to the short-term electric power limits.

Battery power output is controlled below the maximum voltage-based electric power limit and above the minimum voltage-based electric power limit. The output and motor torque determination scheme 340 utilizes the maximum and minimum voltage-based electric power limit to determine maximum motor torques of the first and second electric machines 56 and 72. The output and motor torque determination scheme 340 and the shift execution and engine start/stop control scheme 320 utilizes the maximum motor torques to determine an engine start profile for starting the engine without exceeding the maximum motor torques during engine starting. For example, if the maximum voltage-based electric power limit is above a threshold power level, an aggressive starting profile having higher battery output power is utilized. If the maximum voltage-based electric power limit is below the threshold power level, a starting profile having lower battery output power is utilized. Further, if, during starting, the battery output power exceeds the maximum voltage-based electric power limit, the start profile is altered to maintain the battery output power under the maximum voltage-based electric power limits. The maximum voltage-based electric power limit can be further utilized in the output and motor torque determination scheme 340 to allow the powertrain system to take advantage of increased battery power during engine starting conditions.

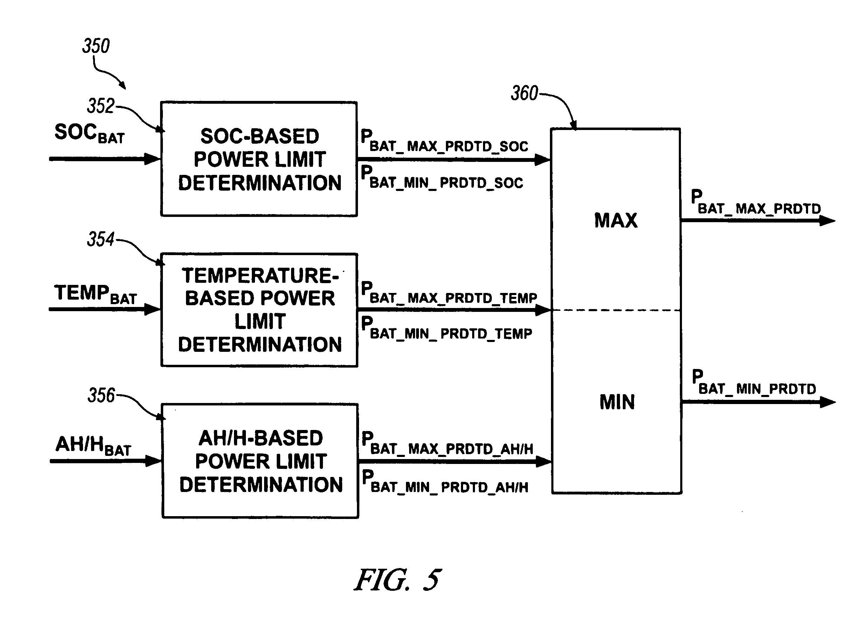

FIG. 5 depicts a power limit determination function 350 utilized by the HCP 5 to establish predicted electric power limits. The long-term electric power limits, the short-term electric power limits, and the voltage-based electric power limits are established utilizing substantially similar power limit determination functions as the power limit determination function 350.

The HCP 5 receives the battery state of charge ('SOC_{BAT}'), the battery temperature ('TEMP_{BAT}'), and the battery amp-hour throughput ('AH/H_{BAT}') from the BPCM 21. The battery state of charge is input into a SOC-based power limit determination function ('SOC-BASED POWER LIMIT DETERMINATION') 352 to determine a battery SOC-based minimum predicted electric power limit ('P_{BAT_MIN_PRDTD_SOC}') and a battery SOC-based maximum predicted electric power limit ('P_{BAT_MAX_PRDTD_SOC}').
The battery temperature is input into a battery temperature-based power limit determination function ('TEMPERATURE-BASED POWER LIMIT DETERMINATION') 354 to determine a battery temperature-based minimum predicted electric power limit ('P_{BAT_MIN_PRDTD_TEMP}') and a battery temperature-based maximum predicted electric power limit ('P_{BAT_MAX_ PRDTD_TEMP}'). The battery amp-hour throughput is input into a battery amp-hour throughput-based determination function ('AH/H-BASED POWER LIMIT DETERMINATION') 356 to determine a battery amp-hour-throughput based minimum predicted electric power limit ('P_{BAT_MIN_PRDTD_AH/H}') and a battery amp-hour throughput-based maximum predicted electric power limit ('P_{BAT_MAX_PRDTD_AH/H}'). In one embodiment, the SOC-based power limit determination function 352, the battery temperature-based power limit determination function 354, and the battery amp-hour throughput based power limit determination function 356 each comprise a lookup table.

An overall predicted electric power limit determination function 360 sets the maximum predicted electric power limit ('P_{BAT_MAX_PRDTD}') to the lowest value of the battery SOC-based maximum predicted electric power limit, and the battery temperature-based maximum predicted electric power limit, the battery amp-hour throughput-based maximum predicted electric power limit. The overall predicted electric power limit determination function 360 sets the minimum predicted electric power limit ('P_{BAT_MIN_PRDTD}') to the highest value of the battery SOC-based minimum predicted electric power limit, the battery temperature-based minimum predicted electric power limit, and the battery amp-hour throughput-based minimum predicted electric power limit.

## Claims

1. Method for controlling a powertrain system comprising a transmission (10) operative to transfer power between a plurality of power actuators (56, 72) and an output member, and an energy storage device (74), the method being **characterized by**:
establishing a first set of electric power limits and a second set of electric power limits for the energy storage device (74);
determining a preferred input power from a first power actuator (56) based upon the first set of electric power limits;
determining a first set of power constraints for constraining input power from the first power actuator (56) and a second set of power constraints for constraining output power from the output member (64) based upon a second set of electric power limits; and
controlling operation of the powertrain system based upon the preferred input power, the first set of power constraints, and the second set of power constraints.

2. The method of claim 1, further comprising:
determining a third set of electric power limits; and
determining a first set of power constraints for constraining input power from the first power actuator (56) and a second set of power constraints for constraining output power from the output member (64) based upon the second set of electric power limits and the third set of electric power limits.

3. The method of claim 2, wherein the first set of power constraints for constraining input power from the first power actuator (56) and the second set of power constraints for constraining output power from the output member are utilized in closed loop control, and/or
wherein the second set of electric power limits are more constrained than the first set of electric power limits and less constrained than the third set of electric power limits.

4. The method of claim 1, further comprising establishing a third set of electric power limits comprising voltage-based electric power limits; and a second set of power constraints for constraining output power from the output member (64) based upon the second set of electric power limits and the third set of electric power limits,
further optionally comprising determining an engine start profile based upon the third set of electric power limits.

5. The method of claim 4, wherein the voltage-based electric power limits are based upon an available amount of power that can be delivered by the energy storage device (74) before reaching one of a minimum permissible voltage for operating the energy storage device (74) and maximum permissible voltage for operating the energy storage device (74).

6. The method of claim 1, wherein the first set of electric power limits are based upon desired electric power levels for operating the energy storage device (74), and/or
wherein the second set of electric power limits are based upon long-term battery durability.

7. The method of claim 1, wherein the first set of electric power limits and the second set of electric power limits for the energy storage device (74) are determined based upon at least one of a state of charge of the energy storage device (74), a temperature of the energy storage device (74), and a throughput of the energy storage device (74).

## Patentansprüche

1. Verfahren zum Steuern eines Antriebsstrangsystems, das ein Getriebe (10), welches betreibbar ist, um Leistung zwischen einer Vielzahl von Leistungsstellgliedern (56, 72) und einem Ausgabeelement zu übertragen, und eine Energiespeichervorrichtung (74) umfasst, wobei das Verfahren **dadurch gekennzeichnet ist, dass**:
ein erster Satz elektrischer Leistungsgrenzen und ein zweiter Satz elektrischer Leistungsgrenzen für die Energiespeichervorrichtung (74) festgelegt wird;
eine bevorzugte Eingabeleistung von einem ersten Leistungsstellglied (56) auf der Grundlage des ersten Satzes elektrischer Leistungsgrenzen bestimmt wird;
ein erster Satz von Leistungsbeschränkungen zum Beschränken der Eingabeleistung vom ersten Leistungsstellglied (56) und ein zweiter Satz von Leistungsbeschränkungen zum Beschränken einer Ausgabeleistung vom Ausgabeelement (64) auf der Grundlage eines zweiten Satzes elektrischer Leistungsgrenzen bestimmt werden; und
ein Betrieb des Antriebsstrangssystems auf der Grundlage der bevorzugten Eingabeleistung, des ersten Satzes von Leistungsbeschränkungen und des zweiten Satzes von Leistungsbeschränkungen gesteuert wird.

2. Verfahren nach Anspruch 1, das ferner umfasst, dass:
ein dritter Satz elektrischer Leistungsgrenzen bestimmt wird; und
ein erster Satz von Leistungsbeschränkungen zum Beschränken der Eingabeleistung vom ersten Leistungsstellglied (56) und ein zweiter Satz von Leistungsbeschränkungen zum Beschränken der Ausgabeleistung vom Ausgabeelement (64) auf der Grundalge des zweiten Satzes elektrischer Leistungsgrenzen und des dritten Satzes elektrischer Leistungsgrenzen bestimmt werden.

3. Verfahren nach Anspruch 2, wobei der erste Satz von Leistungsbeschränkungen zum Beschränken der Eingabeleistung vom ersten Leistungsstellglied (56) und der zweite Satz von Leistungsbeschränkungen zum Beschränken der Ausgabeleistung vom Ausgabeelement in einer Regelung verwendet werden, und/oder
wobei der zweite Satz elektrischer Leistungsgrenzen eingeschränkter als der erste Satz elektrischer Leistungsgrenzen und weniger eingeschränkt als der dritte Satz elektrischer Leistungsgrenzen ist.

4. Verfahren nach Anspruch 1, das ferner umfasst, dass ein dritter Satz elektrischer Leistungsgrenzen, der spannungsbasierte elektrische Leistungsgrenzen umfasst, und ein zweiter Satz von Leistungsbeschränkungen zum Beschränken der Ausgabeleistung vom Ausgabeelement (64) auf der Grundlage des zweiten Satzes elektrischer Leistungsgrenzen und des dritten Satzes elektrischer Leistungsgrenzen festgelegt werden,
das ferner optional umfasst, dass ein Kraftmaschinenstartprofil auf der Grundlage des dritten Satzes elektrischer Leistungsgrenzen bestimmt wird.

5. Verfahren nach Anspruch 4, wobei die spannungsbasierten elektrischen Leistungsgrenzen auf einer verfügbaren Leistungsmenge, die von der Energiespeichervorrichtung (74) geliefert werden kann, bevor entweder eine minimal zulässige Spannung zum Betreiben der Energiespeichervorrichtung (74) oder eine maximal zulässige Spannung zum Betreiben der Energiespeichervorrichtung (74) erreicht wird, beruhen.

6. Verfahren nach Anspruch 1, wobei der erste Satz elektrischer Leistungsgrenzen auf gewünschten elektrischen Leistungsniveaus zum Betreiben der Energiespeichervorrichtung (74) beruht, und/oder
wobei der zweite Satz elektrischer Leistungsgrenzen auf einer Langzeitbeständigkeit der Batterie beruht.

7. Verfahren nach Anspruch 1, wobei der erste Satz elektrischer Leistungsgrenzen und der zweite Satz elektrischer Leistungsgrenzen für die Energiespeichervorrichtung (74) auf der Grundlage eines Ladezustands der Energiespeichervorrichtung (74), einer Temperatur der Energiespeichervorrichtung (74) und/oder eines Durchsatzes der Energiespeichervorrichtung (74) bestimmt werden.

## Revendications

1. Procédé pour commander un système de transmission de puissance comprenant une transmission (10) dont la fonction est de transférer une puissance entre une pluralité d'actionneurs de puissance (56, 72) et un élément de sortie, et un dispositif de stockage d'énergie (74), le procédé étant **caractérisé par** les étapes consistant à :
établir un premier groupe de limites de puissance électrique et un second groupe de limites de puissance électrique pour le dispositif de stockage d'énergie (74) ;
déterminer une puissance d'entrée préférée depuis un premier actionneur de puissance, basé sur le premier groupe de limites de puissance électrique ;
déterminer un premier groupe de contraintes de puissance pour contraindre la puissance d'entrée provenant du premier actionneur de puissance (56) et un second groupe de contraintes de puissance pour contraindre la puissance de sortie provenant de l'élément de sortie (64) en se basant sur un second groupe de limites de puissance électrique ; et
commander le fonctionnement du système de transmission de puissance en se basant sur la puissance d'entrée préférée, sur le premier groupe de contraintes de puissance, et sur le second groupe de contraintes de puissance.

2. Procédé selon la revendication 1, comprenant en outre les étapes consistant à :
déterminer un troisième groupe de limites de puissance électrique ; et
déterminer un premier groupe de contraintes de puissance pour contraindre la puissance d'entrée provenant du premier actionneur de puissance (56), et un second groupe de contraintes de puissance pour contraindre la puissance de sortie provenant de l'élément de sortie (64) en se basant sur le second groupe de limites de puissance électrique et sur le troisième groupe de limites de puissance électrique.

3. Procédé selon la revendication 2, dans lequel le premier groupe de contraintes de puissance pour contraindre la puissance d'entrée provenant du premier actionneur de puissance (56), et le second groupe de contraintes de puissance pour contraindre la puissance de sortie provenant de l'élément de sortie sont utilisés dans une commande en boucle fermée, et/ou dans lequel le second groupe de limites de puissance électrique sont plus contraignantes que le premier groupe de limites de puissance électrique et moins contraignantes que le troisième groupe de limites de puissance électrique.

4. Procédé selon la revendication 1, comprenant en outre l'étape consistant à établir un troisième groupe de limites de puissance électrique comprenant des limites de puissance électrique basées sur des voltages ; et un second groupe de contraintes de puissance pour contraindre la puissance de sortie provenant de l'élément de sortie (64) en se basant sur le second groupe de limites de puissance électrique et sur le troisième groupe de limites de puissance électrique,
comprenant en outre en option l'étape consistant à déterminer un profil de démarrage du moteur en se basant sur le troisième groupe de limites de puissance électrique.

5. Procédé selon la revendication 4, dans lequel les limites de puissance électrique basées sur des voltages sont basées sur une quantité de puissance disponible qui peut être fournie par le dispositif de stockage d'énergie (74) avant d'atteindre un voltage minimum permissible pour faire fonctionner le dispositif de stockage d'énergie (74) et un voltage maximum permissible pour faire fonctionner le dispositif de stockage d'énergie (34).

6. Procédé selon la revendication 1, dans lequel le premier groupe de limites de puissance électrique sont basées sur des niveaux de puissance électrique désirés pour faire fonctionner le dispositif de stockage d'énergie (74), et/ou
dans lequel le second groupe de limites de puissance électrique sont basées sur une durabilité à long terme de la batterie.

7. Procédé selon la revendication 1, dans lequel le premier groupe de limites de puissance électrique et le second groupe de limites de puissance électrique pour le dispositif de stockage d'énergie (74) sont déterminés en se basant sur au moins un état de charge du dispositif de stockage d'énergie (74), une température du dispositif de stockage énergie (74), et une performance du dispositif de stockage d'énergie (74).
